# EUROPÄISCHE PATENTSCHRIFT

(11) **EP 2 291 881 B1**
(45) Veröffentlichungstag und Bekanntmachung des Hinweises auf die Patenterteilung: **17.12.2014**
(21) Anmeldenummer: 09745503.4
(22) Anmeldetag: 30.04.2009
(51) Int. Cl.: H01M 10/44, H02J 7/00

(54) **BATTERIELADEVERFAHREN**
BATTERY CHARGING METHOD
PROCÉDÉ DE CHARGE DE BATTERIE

(30) Priorität: 15.05.2008 DE 102008023659
(43) Veröffentlichungstag der Anmeldung: 09.03.2011
(73) Patentinhaber: Industrie Automation Energiesysteme AG, 79232 March/ Freiburg (DE)
(72) Erfinder: KEGEL, Heinz Josef, 64653 Lorsch (DE)
(74) Vertreter: Kunst, Manuel Nikolaus Johannes
(86) Internationale Anmeldenummer: PCT/EP2009/003136
(87) Internationale Veröffentlichungsnummer: WO 2009/138169

(56) Entgegenhaltungen:
- EP-A- 0 981 194
- WO-A-03/030331
- FR-A- 2 337 962
- US-A- 3 487 284
- US-B1- 6 459 243

## Beschreibung

Die Erfindung betrifft ein Verfahren zum Laden einer Batterie, wobei die Batterie für die Dauer jedes Ladevorgangs an ein Ladegerät angeschlossen wird und wobei über mehrere aufeinander folgende Ladevorgänge der Batterie wenigstens ein Zählerstand gebildet wird, welcher diese mehreren aufeinander folgenden Ladevorgänge charakterisiert.

Derartige Verfahren sind bekannt beispielsweise aus der DE 199 28 446 A1, die ein Verfahren zur Ladung einer wiederaufladbaren Batterie beschreibt, bei dem die Menge der beim Laden der Batterie zugeflossenen Ladung in einem Speicher aufsummiert wird, wobei bei vorzeitiger Unterbrechung des Ladevorgangs der Inhalt des Speichers erhalten bleibt.

Aus der WO 03/030331 A1 sind ein System und ein Verfahren zur Batterieladung bekannt, bei welchen der Abbruch des einzelnen Ladevorgangs auf die Auswertung der ersten und zweiten Ableitung der angelegten Ladespannung gestützt wird.

Bei Bleibatterien besteht nach längerem Gebrauch die Gefahr der Säureschichtung im Elektrolyten und der Sulfatation, also der Bildung von kristallinem Sulfat an den Elektroden. Um dies zu verhindern, ist ein Ausgleich erforderlich, der darin bestehen kann, dass die Batterie mit einer erhöhten Spannung aufgeladen wird, was zu dem sogenannten Gasen, also der Elektrolyse von Wasser unter Bildung von Sauerstoff, führt. Dieses Gasen bewirkt ein Durchmischen des Elektrolyts und damit eine Aufhebung der Säureschichtung und bewirkt weiter, dass sich das kristalline Sulfat wieder auflöst. Nachteilig ist bei dem Gasen, dass Wasser im Elektrolyten verloren geht, dass Abschlammung, also die Absprengung von porösem Material an den Elektroden und Ablagerung dieses Materials am Boden der Batterie, auftritt, dass Wärme erzeugt wird und somit Energie zusätzlich verbraucht wird. Durch das abgesprengte Material am Boden besteht sogar die Gefahr, dass die Platten der Elektroden kurzgeschlossen werden, wodurch die Batterie funktionsunfähig wird.

Zur Verlängerung der Lebensdauer der Batterien unterliegen diese, insbesondere auf dem Gebiet der elektrischen Traktion, in der Industrie einer systematischen Wartung. Hierzu wird besonders geschultes Personal eingesetzt, das nach genauen Arbeitsanweisungen insbesondere die Ladung mit steuerbaren Ladegeräten vornimmt. Da wiederaufladbare Batterien heute zu einem überwiegenden Teil auch in Anwendungen wie Rollstühlen, elektrischen Kleinfahrzeugen, Golfcarts, elektrischen Fußbodenreinigungsmaschinen und handgeführten Gabelstaplern eingesetzt werden, ist dieses Personal oft nicht vorhanden. Der Umgang mit der Wiederaufladung der Batterie wird hierdurch immer unkontrollierter. Werden diese Batterien nur gelegentlich geladen, zum Beispiel zu einem Zeitpunkt, an dem sie noch nicht einen bestimmten Entladezustand erreicht haben, und werden sie dabei auch nicht vollständig geladen, tritt langfristig eine Unterladung auf.

Andererseits werden die Batterien auch an einem Ladegerät angedockt, obwohl kaum Energie aus der Batterie entnommen wurde, was zu uneffektiven Ladeergebnissen führt. Hierbei treten höhere mittlere Batterietemperaturen auf. Dadurch verkürzt sich die zu erwartende Lebensdauer der Batterie.

Der Erfindung liegt die Aufgabe zugrunde, ein Verfahren zum Laden einer Batterie zu schaffen, welches einen ausgeglichenen Ladezustand bereitstellt und einen ökonomischen Energieeinsatz sicherstellt.

Zur Lösung dieser Aufgabe ist vorgesehen, dass bei einem Verfahren der eingangs genannten Art nach Anschluss der Batterie an das Ladegerät der aktuelle Zählerstand oder dergleichen Zahlenwert ausgelesen wird und ein Ladevorgang in einem ersten Betriebsmodus mit einem ersten Ladefaktor gestartet wird, wenn der Zählerstand oder dergleichen Zahlenwert einen vorbestimmten Wert nicht überschreitet, und ein Ladevorgang in einem zweiten Betriebsmodus mit einem zweiten Ladefaktor gestartet wird, wenn der Zählerstand oder dergleichen Zahlenwert den vorbestimmten Wert überschreitet, und dass der zweite Ladefaktor größer als der erste Ladefaktor ist. Der Zählerstand kann im einfachsten Fall durch die Zeitspanne bestimmt sein, die die Batterie an das Ladegerät angeschlossen ist, oder auch aus der der Batterie zugeführten Ladung, beispielsweise durch Messung des Ladestroms, abgeleitet sein, oder auf andere Weise gewonnen sein, die den Ladezustand und/oder die bereits ausgeführten Ladevorgänge charakterisiert.

Der Ladefaktor ist der Quotient aus aufgenommener Ladung und durch die Batterie abgebbarer Ladung. Eine Batterie braucht daher also immer eine gewisse Überladung, also einen Ladefaktor größer als 1, das heißt, es muss mehr Kapazität in die Batterie geladen werden, als nachher wieder entnommen werden kann.

Mit der Erfindung wird vorteilhaft erreicht, dass die Batterie am kritischen Pfad betrieben wird, also in einem Zustand gehalten wird, der elektrochemisch gerade noch vertretbar ist, ohne Batterieschädigungen hervorzurufen, wobei der bei Ladungen mit erhöhtem Ladefaktor erforderliche zusätzliche Energieaufwand, der sich zu einem großen Teil in einer Erwärmung der Batterie niederschlägt, weitestgehend vermieden werden. Dies führt zu höherer Kapazitätsverfügbarkeit der Batterie und zu einer längeren Lebensdauer.

Vorzugsweise ist der zweite Ladefaktor so eingerichtet, dass ein Gasen der Batterie während eines vollständig durchgeführten Ladevorgangs im zweiten Betriebsmodus erzwungen wird. Dieser Betriebsmodus, der als Service-Ladung bezeichnet wird, hat einen Ladefaktor von mehr als 1,1, beispielsweise 1,17.

Vorzugsweise ist der erste Ladefaktor so eingerichtet, dass ein Gasen der Batterie während eines vollständig durchgeführten Ladevorgangs im ersten Betriebsmodus im Wesentlichen vermieden ist. Im ersten Betriebsmodus wird somit eine sparsame Ladung der Batterie ausgeführt, bei der ein möglichst geringer Energieeinsatz erforderlich ist. Somit wird Wasser gespart, und Wärmeentwicklung, die der Lebenserwartung der Batterie abträglich ist, vermieden. Der erste Ladefaktor ist daher nahezu oder gleich 1 oder geringfügig größer als 1 gewählt, beispielsweise ein Wert zwischen 1,00 und 1,05, insbesondere 1,01 oder 1,02.

Gemäß einer Ausgestaltung der Erfindung kann vorgesehen sein, dass bei Überschreiten einer vorbestimmten Anzahl von Ladevorgängen im zweiten Betriebsmodus ein Ladevorgang in einem dritten Betriebsmodus mit einem dritten Ladefaktor erzwungen wird, wobei der dritte Ladefaktor größer als der zweite Ladefaktor ist. Dieser dritte Ladefaktor ist vorzugsweise größer als 1,2, beispielsweise größer oder gleich 1,25 gewählt. Von Vorteil ist dabei, dass bei einem vorzeitigen Abbruch einer Service-Ladung, beispielsweise wenn ein Benutzer bei dem Ladungsausgleich, also dem Wiederaufladen, eingreift, weil er die Batterie vorzeitig benötigt, beim nächsten Ladevorgang oder nach einer festgelegten Anzahl von abgebrochenen Service-Ladungen eine Korrektur-Ladung erzwungen wird, die dann zu Wartungszwecken nötig ist und die einen gebrauchsfähigen Zustand der Batterie bewahrt oder wieder herstellt.

Gemäß einer Ausgestaltung der Erfindung kann vorgesehen sein, dass der Zählerstand wenigstens durch die Anzahl der aufeinander folgenden Ladevorgänge der Batterie bestimmt ist. Eine derartige Ermittlung des Zählerstandes ist beispielsweise dann bereits ausreichend, wenn die Batterie regelmäßig über einen bestimmten Zeitraum, beispielsweise an jedem Arbeitstag über Nacht, wieder aufgeladen wird.

Um dem vorzeitigen Abbruch eines Ladevorgangs, bei dem also nicht die der Batterie entnommene Ladungsmenge wieder zugeführt werden konnte, beispielsweise weil die Batterie vorzeitig wieder benötigt wurde, Rechnung zu tragen, kann vorgesehen sein, dass die akkumulierte.Lademenge für aufeinander folgende Ladevorgänge in einem ersten Zwischenspeicher abgelegt wird. Von Vorteil ist dabei, dass nun eine Information in diesem ersten Zwischenspeicher bereit steht, die die bereits durchgeführten, aufeinander folgende Ladevorgänge charakterisiert und die zur Bildung beziehungsweise Bestimmung des Zählerstands verwendbar ist.

Gemäß einer Ausgestaltung der Erfindung kann vorgesehen sein, dass der Zählerstand wenigstens durch den Wert der akkumulierten Lademenge im ersten Zwischenspeicher bestimmt ist und dass der vorbestimmte Wert für den Zählerstand der akkumulierten Lademenge einer vorbestimmten Anzahl von vollständig durchgeführten Ladevorgängen entspricht. Somit wird vorteilhaft erreicht, dass nach einer vorbestimmten Anzahl von Standard-Ladevorgängen eine Service-Ladung durchgeführt wird, und zwar unabhängig davon, ob diese Standard-Ladevorgänge jeweils in einem zusammenhängenden Ladevorgang oder über mehrere, jeweils vorzeitig unterbrochene Ladevorgänge verteilt, durchgeführt wurden. Beispielsweise kann ein Ladevorgang als Standard-Ladevorgang charakterisiert sein, wenn eine Ladung von 70 % oder mehr, beispielsweise 80 %, der Normkapazität der Batterie erreicht ist.

Gemäß einer Ausgestaltung der Erfindung kann vorgesehen sein, dass die zur Erreichung des Ladefaktors eines Ladevorgangs erforderliche Überladung für aufeinander folgende Ladevorgänge in einem zweiten Zwischenspeicher akkumuliert wird. Hierzu kann vorteilhaft die der Batterie zugeführte Ladung mit dem Ladefaktor multipliziert oder allgemein bewertet in den zweiten Zwischenspeicher abgelegt werden, wobei nach erfolgtem Ladungsausgleich zur Überladung solange ein Ladestrom in die Batterie eingespeist wird, bis die durch den Ladefaktor vorgegebene Überladung erreicht ist. Hierzu wird vorzugsweise die während der Überladungsphase eingespeiste Ladungsmenge von dem Wert des zweiten Zwischenspeichers subtrahiert, bis dieser Zwischenspeicher die Erreichung der Überladung gemäß Ladefaktor anzeigt. Beispielsweise ist hierbei ein Verfahren zur Ladung einer wiederaufladbaren Batterie gemäß der DE 199 28 446 A1 mit Vorteil verwendbar.

Gemäß einer Ausgestaltung der Erfindung kann vorgesehen sein, dass nach Beenden der regulären Ladung entsprechend dem Wert im zweiten Zwischenspeicher eine Überladung in die Batterie eingespeist wird, wobei der zweite Zwischenspeicher entsprechend der bereits eingespeisten Überladung in regelmäßigen Abständen aktualisiert wird. Vorzugsweise bleibt der Wert des zweiten Zwischenspeichers erhalten, wenn die Batterie vorzeitig vom Ladegerät getrennt wird. Hierdurch wird vorteilhaft erreicht, dass bei einer vorzeitigen Unterbrechung im nächsten Ladevorgang die für den vorhergehenden Ladevorgang erforderliche Überladung gemäß Ladefaktor vollständig ausgeführt werden kann. Gemäß einer Ausgestaltung der Erfindung kann vorgesehen sein, dass eine Intervallladung ausgeführt wird, wenn der zweite Zwischenspeicher einen Wert für Überladung enthält, der 5 % der Nennkapazität der angeschlossenen Batterie nicht übersteigt und dass die Intervallladung abwechselnde zeitliche Abschnitte mit Ladevorgang und zeitliche Abschnitte ohne Ladevorgang umfasst. Von Vorteil ist dabei, dass in der Schlussphase eines Ladevorgangs eine Überhitzung der Batterie und somit eine Schädigung der Batterie vermeidbar ist, da die Batterie aufgrund der zwischengeschalteten Ruhephasen adiabatisch oder nahezu in Gleichgewichtszuständen an den angestrebten End-Ladezustand herangeführt wird.

Gemäß einer Ausgestaltung der Erfindung kann vorgesehen sein, dass der Zählerstand wenigstens durch die verstrichene Zeitdauer seit dem letzten ausgeführten Ladevorgang oder seit dem letzten ausgeführten Ladevorgang im zweiten Betriebsmodus bestimmt ist. Der so charakterisierte Zählerstand kann zusätzlich im Sinne einer Oder-Bedingung oder allein für sich das Starten eines Ladevorgangs in dem zweiten Betriebsmodus erzwingen. Von Vorteil ist dabei, dass eine Service-Ladung auch dann durchführbar ist, wenn die angeschlossene Batterie über einen längeren Zeitraum, beispielsweise 7 oder 14 Tage, nicht in Gebrauch war oder zwischenzeitlich nur unvollständig aufgeladen wurde oder über diesen Zeitraum keine Service-Ladung ausgeführt wurde. Somit ist eine weitere Ursache für eine Schädigung der Batterie aufgrund von fehlerhafter Bedienung und/oder von Schichtungen im Elektrolyten vermeidbar.

Gemäß einer Ausgestaltung der Erfindung kann vorgesehen sein, dass das Ausführen eines Ladevorgangs im dritten Betriebsmodus angezeigt wird. Von Vorteil ist dabei, dass der Benutzer einen deutlichen Hinweis auf durch ihn oder andere Personen durchgeführte fehlerhafte Bedienungen erhält. Beispielsweise kann der Benutzer durch die Anzeige veranlasst werden, sich in einem Bedienungshandbuch über die ordnungsgemäße Pflege der Batterie zu erkundigen.

Gemäß einer Ausgestaltung der Erfindung kann vorgesehen sein, dass bei Überschreiten einer vorbestimmten Anzahl von Ladevorgängen im dritten Betriebsmodus eine Fehlermeldung ausgegeben und/oder dokumentiert wird. Hierdurch wird vorteilhaft erreicht, dass die unsachgemäße Behandlung der Batterie, die zur Durchführung eines Ladevorgangs im dritten Betriebsmodus führte, für den Hersteller der Batterie oder weitere Personen dauerhaft sichtbar gemacht wird. Somit ist eine durch fortgesetzte unsachgemäße Behandlung der Batterie bewirkte Schädigung oder sogar Zerstörung derselben auf die unsachgemäße Benutzungshandlung zurückführbar.

Gemäß einer Ausgestaltung der Erfindung kann vorgesehen sein, dass bei einem Ladevorgang im ersten Betriebsmodus zu Beginn geprüft wird, ob eine volle Batterie angeschlossen ist, und dass in diesem Fall der Ladevorgang im ersten Betriebsmodus ausgeführt wird, wenn die Anzahl der Erkennungen einer vollen angeschlossenen Batterie einen vorbestimmten Wert überschreitet, und nicht ausgeführt wird, wenn diese Anzahl den vorbestimmten Wert nicht überschreitet. Eine volle Batterie kann hier beispielsweise dadurch erkannt werden, dass die Spannung zu Beginn des Ladevorgangs sehr schnell ansteigt. Ein solcher Spannungsanstieg kann jedoch auch auf einer Sulfatation beruhen. Von Vorteil ist bei der Ausgestaltung, dass eine volle Batterie nicht unnötig durch einen Ladevorgang insbesondere thermisch belastet wird, dass aber eine vorliegende Sulfatation erkannt wird, wenn eine vermeintlich volle Batterie eine bestimmte Anzahl von Malen zum Laden angeschlossen wird. In diesem Fall ignoriert das erfindungsgemäße Verfahren die Erkennung einer vermeintlich vollen Batterie und führt eine erzwungene Ladung aus, die die Sulfatation beseitigen soll.

Gemäß einer Ausgestaltung der Erfindung kann vorgesehen sein, dass die Ladevorgänge im ersten, zweiten und gegebenenfalls dritten Betriebsmodus durch jeweils einen oder mehrere Parameter gekennzeichnet sind und dass die Ladevorgänge im ersten, zweiten und gegebenenfalls dritten Betriebsmodus durch ein identisches, von diesen Parametern abhängiges Steuerungsprogramm gesteuert und/oder geregelt werden. Von Vorteil ist dabei, dass ein geringer Programmieraufwand zur Implementierung des Verfahrens nötig ist. Von Vorteil ist dabei weiter, dass das Verfahren in einer Steuereinheit am Ladegerät implementierbar ist, wobei vorzugsweise an der Batterie vorgesehene Speichereinheiten die für die jeweilige Batterie zutreffenden Parameter, insbesondere Ladefaktoren und kritische Zählerstände oder dergleichen Zahlenwerte beim Anschluss der Batterie an das Ladegerät bereitstellt. Somit ist eine Vielzahl von unterschiedlichen Batterietypen an das Ladegerät anschließbar, wobei für jeden Batterietyp die jeweils passenden Parameter zur Ausführung des angepassten Verfahrens verwendbar sind.

Das Verfahren ist mit Vorteil insbesondere dann anwendbar, wenn die Batterie ein Bleiakkumulator ist.

Gemäß einer Ausgestaltung der Erfindung kann vorgesehen sein, dass wenigstens ein Zählerstand durch die Anzahl der durchgeführten aufeinander folgenden Ladevorgänge bestimmt ist und/oder wenigstens ein Zählerstand durch die über mehrere aufeinander folgende Ladevorgänge akkumulierte Lademenge bestimmt ist und/oder wenigstens ein Zählerstand durch die verstrichene Zeitdauer seit dem letzten Ladevorgang bestimmt ist und dass nach Anschluss der Batterie an das Ladegerät die aktuellen Zählerstände oder dergleichen Zahlenwerte ausgelesen werden und ein Ladevorgang im zweiten Betriebsmodus gestartet wird, wenn wenigstens einer der Zählerstände oder dergleichen Zahlenwerte seinen vorbestimmten Wert überschreitet, und andernfalls ein Ladevorgang im ersten Betriebsmodus gestartet wird. Somit ist vorteilhaft eine Oder-Funktion für die unterschiedlichen, bereits beschriebenen Maßnahmen zur Vermeidung der unterschiedlichen Arten von unsachgemäßen beziehungsweise fehlerhaften Bedienungen einer Batterie bereitgestellt.

Bei einem verfeinerten Verfahren kann vorgesehen sein, dass zur Ermittlung eines Zählerstandes die einzelnen Ladevorgänge in Abhängigkeit von der erreichten Wiederaufladung unterschiedlich gewichtet werden, wobei Ladevorgänge mit einer Wiederaufladung von wenigsten 80% der Normkapazität gezählt werden. Beispielsweise kann vorgesehen sein, dass, wenn die Wiederaufladung der Batterie einen Zustand erreicht, der nicht zwanghaft ein Rücksetzen des Ladeverfahrens erfordert, beispielsweise wenn eine Wiederaufladung von wenigstens 80% der Normkapazität durchgeführt wurde, bei einem maximalen Zähler von 10 eine Wiederaufladung bis 100% der Normkapazität, also bis zum Ladeende, mit 2, eine Wideraufladung bis 90 % der Normkapazität mit 3 und eine Wiederaufladung bis 80 % der Normkapazität, also bis zum Erreichen des Kalibrierpunktes, mit 4 bewertet werden. Es sind natürlich auch verfeinerte Aufteilungen und/oder andere konkrete Wertzuweisungen realisierbar. Wird als über die Ladevorgänge mit den festgelegten Werten aufsummierter Zählerstand der Maximalwert, in diesem Fall 10, oder höher ermittelt, so wird im zweiten Betriebsmodus mit dem zweiten Ladefaktor geladen, andernfalls im ersten Betriebsmodus. Mit dem verfeinerten Verfahren und insbesondere der Wichtung wird vorteilhaft erreicht, dass unvollständig ausgeführte Ladevorgänge eher zu einem Ladevorgang im zweiten Betriebsmodus, also einem Service-Ladevorgang, führen, als vollständig ausgeführte. Eine Akkumulation von Ladungsmengen ist hierdurch verzichtbar, kann aber zusätzlich die Energieausbeute verbessern.

Zur Ausführung eines Verfahrens der beschriebenen Art ist vorteilhaft ein Batterieladesystem vorgesehen, das wenigstens ein Ladegerät und wenigstens ein an das eine Ladegerät anschließbare Batterie hat. Vorzugsweise ist vorgesehen, dass die Batterie und/oder das Ladegerät wenigstens über ein Speichermedium zur Speicherung der Zählerstände oder dergleichen Zahlenwerte und/oder der Parameter, insbesondere der einzelnen Ladefaktoren und/oder der für den Betrieb im zweiten beziehungsweise dritten Betriebsmodus maßgeblichen kritischen Zählerstände oder dergleichen Zahlenwerte und/oder Zahlenwerte, aus denen sich diese kritischen Zählerstände oder dergleichen Zahlenwerte ableiten lassen, verfügt.

Das erfindungsgemäße Verfahren kann vorteilhaft für Fertigungstransportsysteme, beispielsweise Gabelstapler oder dergleichen, also für Batterien, die für Traktionsaufgaben eingesetzt werden, Verwendung finden. Bei derartigen Batterien handelt es sich um größere Geräte, die durchaus 1,5 Tonnen wiegen können und Abmessungen von über einem Meter und sogar mehreren Metern haben. Für derartig große Batterien besteht oft das Problem, dass Wärme schlecht nach außen abgegeben werden kann. So ist zwar die ideale Arbeitstemperatur einer Batterie ungefähr 30° C, in der Praxis treten jedoch häufig durch elektrochemische Vorgänge Temperaturen von 55° C, das ist die zulässige Obergrenze für einen schädigungsfreien Betrieb, und gegen Ende einer Arbeitswoche sogar oft Temperaturen über 60° C auf. Dies bewirkt eine deutliche Verringerung der Lebensdauer der Batterie, die normalerweise bei ungefähr 1.500 Ladezyklen liegt. Durch das erfindungsgemäße Verfahren wird die Gefahr der Überhitzung derartiger Batterien vermindert, da nicht bei jedem Ladevorgang ein erhöhter Ladefaktor angewendet wird.

Die Erfindung wird nun anhand von in den Figuren dargestellten Ausführungsbeispielen näher beschrieben. Die Erfindung ist allerdings nicht auf die beschriebenen Ausführungsbeispiele beschränkt, sondern es ergeben sich weitere Ausführungsbeispiele durch Kombination der Merkmale der Ansprüche.

Es zeigt
- Fig. 1: ein Batterie-Ladesystem zur Ausführung eines erfindungsgemäßen Verfahrens,
- Fig. 2: ein weiteres Batterie-Ladesystem zur Ausführung eines erfindungsgemäßen Verfahrens,
- Fig. 3: ein drittes Batterie-Ladesystem zur Ausführung eines erfindungsgemäßen Verfahrens,
- Fig. 4: den Ablaufplan des ersten Teils eines erfindungsgemäßen Verfahrens,
- Fig. 5: den zweiten Teil des erfindungsgemäßen Verfahrens gemäß Fig. 4,
- Fig. 6: eine Alternative zu dem zweiten Teil des Verfahrens gemäß Fig. 5,
- Fig. 7: tabellarisch die Belegung eines Informationspostfachs zur Ausführung eines erfindungsgemäßen Verfahrens und
- Fig. 8: tabellarisch die Belegung eines Datenpostfachs zur Ausführung eines erfindungsgemäßen Verfahrens,

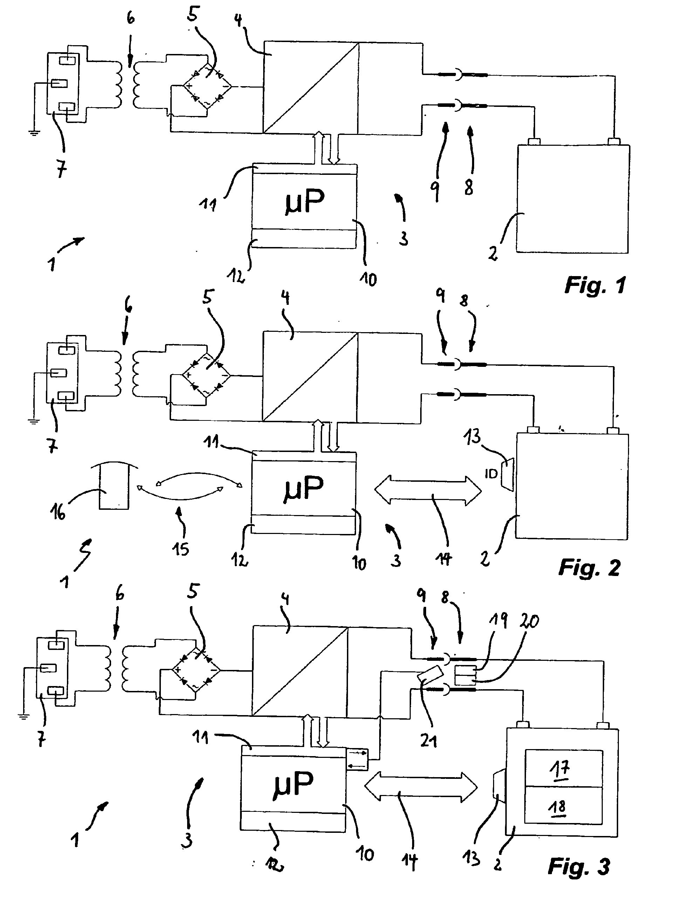

Fig. 1 zeigt ein allgemein mit 1 bezeichnetes Batterie-Ladesystem, das eine Batterie 2 und ein Ladegerät 3 hat.

Das Ladegerät hat einen Laderegler 4, der über eine Gleichrichterschaltung 5 und einem Netztransformator 6 an einen Netzanschluss 7 zur Versorgung mit elektrischer Energie angeschlossen ist. Der Netzanschluss 7 ist zwei- oder dreiphasig ausgeführt.

Zum Durchführen eines Ladevorgangs ist die Batterie 2 über Batteriestecker 8 an Ladegerätestecker 9 des Ladereglers 4 angeschlossen. Zur Steuerung des Ladevorgangs ist ein Mikroprozessor 10 im Ladegerät 3 vorgesehen, der während des Ladevorgangs auf eine als Informationspostfach 11 und eine als Datenpostfach 12 bezeichnete Speichereinheit zugreifen kann. Informationspostfach 11 und Datenpostfach 12 können auch in getrennten Speicherbereichen einer gemeinsamen Speichereinheit vorgesehen sein.

Das Informationspostfach 11 enthält Daten beziehungsweise Parameter, die die Batterie 2 charakterisieren, und die zur Durchführung des Ladevorgangs vom Mikroprozessor 10 auslesbar sind. Diese Daten beziehungsweise Parameter umfassen insbesondere Angaben zur Batteriekapazität, Batteriespannung, zum Ersteinsatz der Batterie, über den Ladefaktor für eine Energiespar-Ladung, den Ladefaktor für eine Service-Ladung, den Ladefaktor für eine Korrektur-Ladung, den maximalen Zählerstand für die Anzahl durchgeführter Ladevorgänge, den maximalen Zählerstand für das Erkennen einer vollen Batterie, den normierten Zykluswert für einen Standard-Ladevorgang, den maximalen Zählerstand für ausgeführte Service-Ladungen, den maximalen Zählerstand für ausgeführte Korrektur-Ladungen, den maximalen Zählerstand für ein Service-Ladungsintervall und/oder den maximalen Zählerstand für eine Überladung.

Das Datenpostfach 12 enthält Prozessparameter, die den Ladevorgang und/oder bereits durchgeführte Ladevorgänge charakterisieren. Insbesondere enthält das Datenpostfach 12 den Zählerstand einer normierten akkumulierten Zwischenladebilanz, den Zählerstand einer normierten akkumulierten Ladebilanz, Angaben über die letzte Service-Ladung, den Zählerstand für die durchgeführten Ladevorgänge, den Zählerstand für die Anzahl der Erkennungen einer vollen Batterie, den Zählerstand für die durchgeführten Korrektur-Ladungen, den Zählerstand für die durchgeführten Service-Ladungen, den Zählerstand für den Schutz vor Überladung und/oder weitere Prozessdaten beziehungsweise Parameter. Der Mikroprozessor 10 greift während des Ladevorganges auf diese Daten zu und aktualisiert sie in vorzugsweise regelmäßigen Abständen entsprechend dem Fortschritt des Ladevorgangs.

Fig. 2 zeigt ein weiteres Ausführungsbeispiel eines Batterieladesystems 1, bei dem funktionell gleichwirkende Bestandteile mit gleichen Bezugszeichen wie in Fig. 1 bezeichnet und nicht erneut beschrieben sind.

Das Batterie-Ladesystem 1 gemäß Fig. 2 unterscheidet sich von dem gemäß Fig. 1 dadurch, dass an der Batterie 2 eine Batterie-Identifikation 13 mit Informationen zur Identifikation der Batterie, insbesondere des Batterietyps, vorgesehen ist, die der Mikroprozessor 10 des Ladegeräts 3 übermittelt zum Datenaustausch 14 auslesen und/oder beschreiben kann. Der Mikroprozessor 10 ist ferner über Mittel zur Ankopplung 15 mit einem Computernetzwerk 16 verbunden, aus welchem die für einen Ladevorgang erforderlichen Parameter zu der aus der Batterie-Identifikation 13 ausgelesenen Information ermittelt und in das Informationspostfach 11 gespeichert werden können.

Das Computernetzwerk 16 kann weiter Daten über bereits mit der Batterie 2 durchgeführte Ladevorgänge zur Befüllung des Datenpostfaches 12 bereitstellen beziehungsweise in regelmäßigen oder bedarfsgerecht gestalteten Abständen aktualisiert aufnehmen, also eine Buchhaltungsfunktion für die anschließbaren Batterien ausüben.

Fig. 3 zeigt die Prinzipskizze eines weiteren Batterie-Ladesystems 1, bei dem wieder funktionell gleichwirkende Bestandteile wie in Fig. 1 beziehungsweise Fig. 2 bezeichnet und nicht erneut beschrieben sind.

Das Batterie-Ladesystem 1 gemäß Fig. 3 unterscheidet sich von dem gemäß Fig. 1 insbesondere dadurch, dass die Batterie 2 nun ebenfalls ein Informationspostfach 17 und ein Datenpostfach 18 aufweist, die zur Befüllung des Informationspostfachs 11 und des Datenpostfachs 12 am Mikroprozessor 10 bei Anschluss der Batterie 2 zu einem Ladevorgang vorgesehen sind, und die die Daten beziehungsweise Prozessparameter enthalten, die sich auf die vorliegende Batterie 2 beziehen.

Informationspostfach 17 und/oder Datenpostfach 18 können auch zusätzlich oder alternativ als Informationspostfach 19 und Datenpostfach 20 im Batteriestecker 8 ausgebildet sein. Der zum Batteriestecker 8 passend ausgebildete Ladegerätestecker 9 umfasst ein Lese-Schreibgerät 21, welches vom Mikroprozessor 10 angesteuert wird und mit welchem das Informationspostfach 19 und das Datenpostfach 20 oder über im Batteriestecker 8 ausgebildete Anschlüsse das Informationspostfach 17 und das Datenpostfach 18 in der Batterie auslesbar und/oder beschreibbar sind.

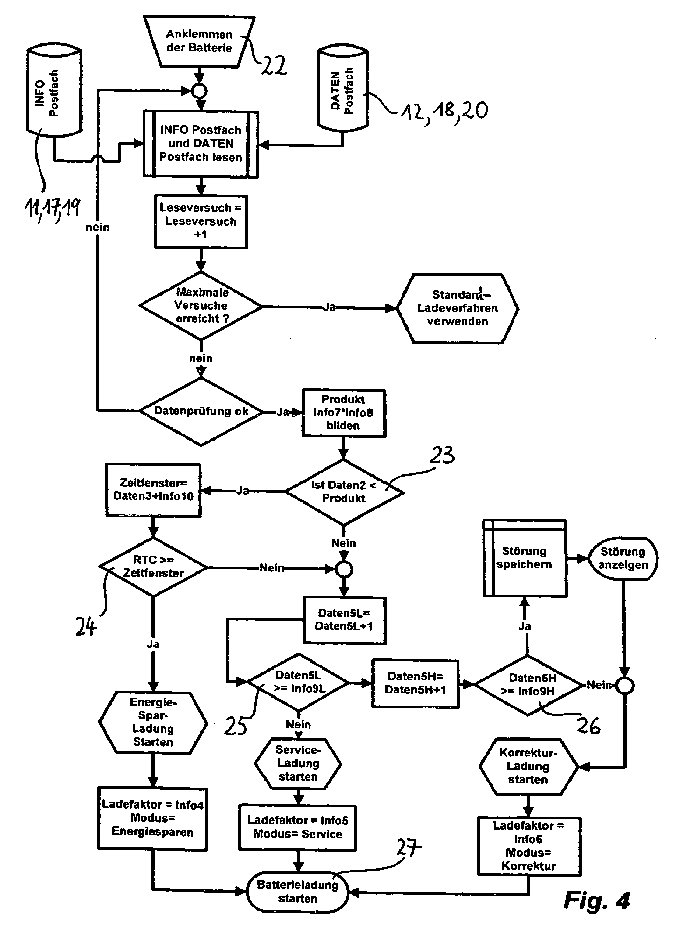

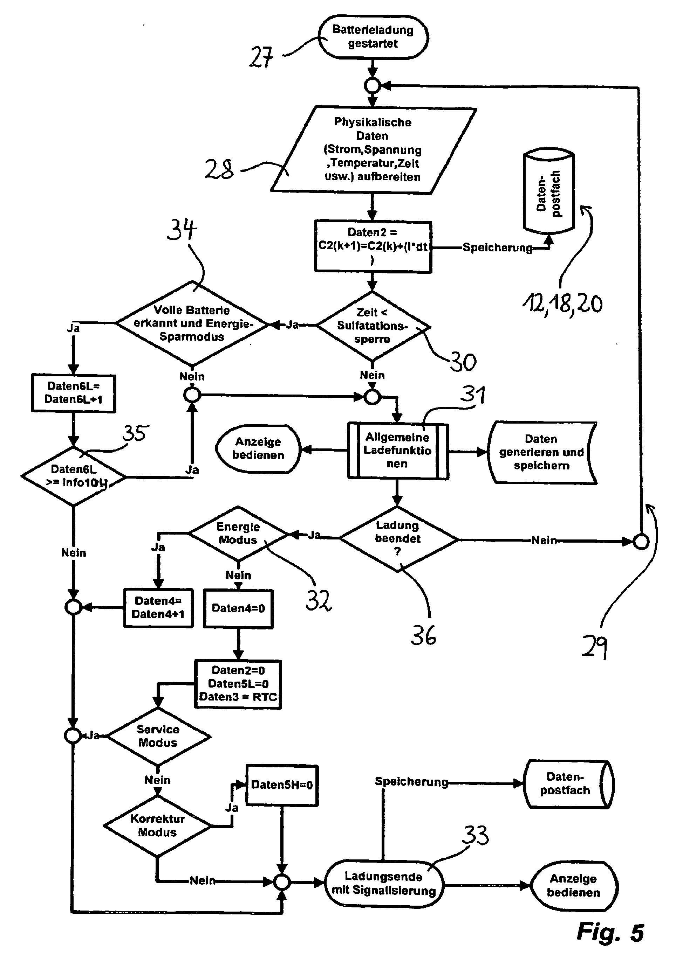

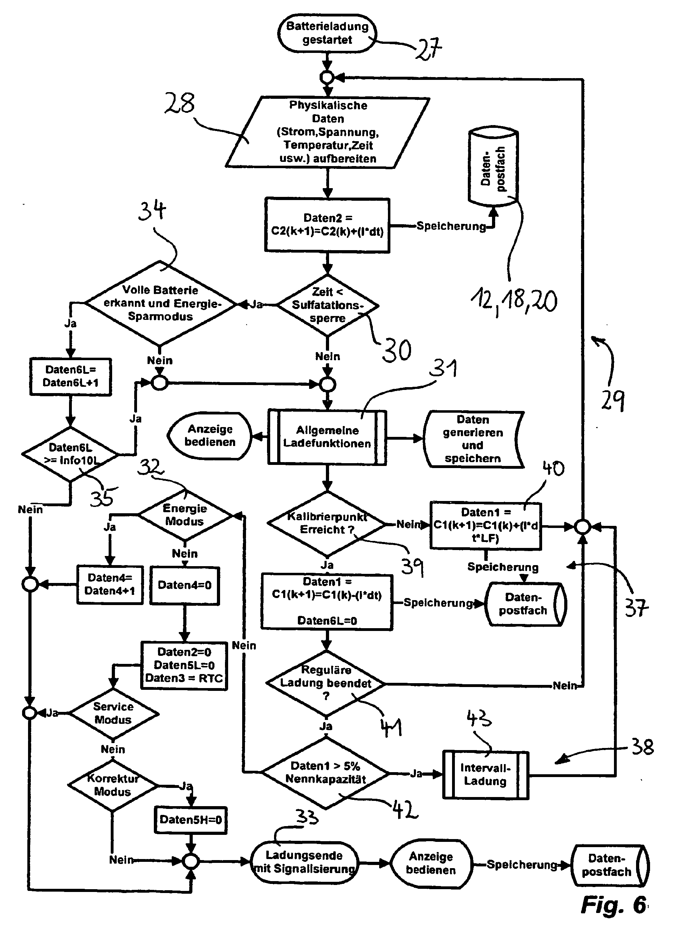

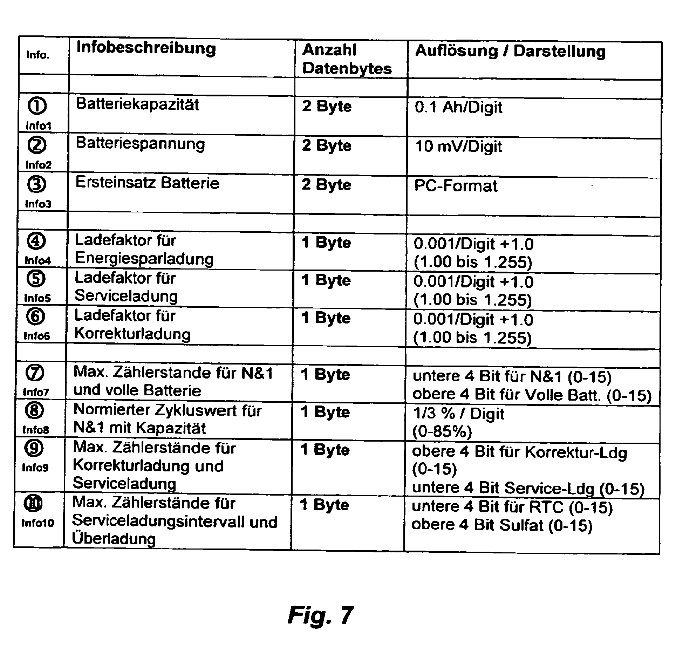

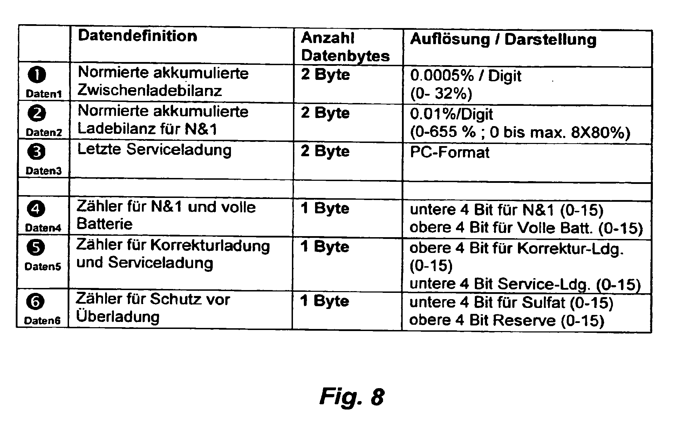

Fig. 4 zeigt den ersten Teil eines Ablaufplans für ein Ausführungsbeispiel der Erfindung, an welches sich in einer Variante der Ablaufplan gemäß Fig. 5 und in einer anderen Variante der Ablaufplan gemäß Fig. 6 anschließt. Die in den Feldbezeichnungen angegebenen Parameter und Datenwerte beziehen sich hierbei auf die Tabellen gemäß Fig. 7 und Fig. 8, wobei beispielsweise Daten1 den ersten Eintrag im Datenpostfach gemäß Fi. 8, Info 3 den dritten Eintrag im Informationspostfach gemäß Fig. 7 und die Endungen "L" und "H" jeweils die unteren und oberen 4 Bits der jeweils als 8 Bit-Zahl realisierten Zahlenwerte beschreiben.

Zur Ausführung des Verfahrens enthält das Informationspostfach 11, 17, 19 wenigstens die in der Tabelle in Fig. 7 angegebenen Einträge und das Datenpostfach 12, 18, 20 wenigstens die in der Tabelle in Fig. 8 angegebenen Daten.

Die Tabellen enthalten jeweils in einer Spalte eine Bezeichnung des jeweiligen Eintrags in Form einer Eintragsnummer, auf die im Folgenden Bezug genommen wird, in der nächsten Spalte eine Kurzbeschreibung des Eintrags, in der nächsten Spalte den für den Eintrag in der betreffenden Speichereinheit reservierten Speicherplatz und in der letzten, rechten Spalte Angaben über die Auflösung beziehungsweise Darstellung des betreffenden Zahlenwerts für den Eintrag im reservierten Speicherbereich.

Bei der Durchführung des Verfahrens gemäß Fig. 4 wird nach Anklemmen 22 der Batterie 2 sowohl das Informationspostfach 11, 17, 19 als auch das Datenpostfach 12, 18, 20 durch den Mikroprozessor 10 eingelesen. Hierbei werden bis zum Erreichen einer maximalen Anzahl von Versuchen Leseversuche durchgeführt, wobei bei Erreichen einer maximalen Anzahl von Leseversuchen ohne erfolgreiche Datenprüfung ein Standard-Ladeverfahren der bekannten Art ausgeführt wird.

Bei erfolgreichem Einlesen der Daten aus Informationspostfach 11, 17, 19 und Datenpostfach 12, 18, 20, also dem Einlesen der Werte für die Einträge gemäß Fig. 7 und 8, wird nun das Produkt des Zahlenwerts in den unteren vier Bits des Eintrags Nr. 7, "Max. Zählerstand für N&1", im Informationspostfach 11, 17, 19 mit dem Zahlenwert im Eintrag Nr. 8, "Normierter Zykluswert für N&1 mit Kapazität", des Informationspostfachs 11, 17, 19 gebildet und mit dem Zahlenwert für die normierte akkumulierte Ladebilanz für N & 1. aus Eintrag Nr. 2 im Datenpostfach 12, 18, 20 verglichen. Ist die normierte akkumulierte Ladebilanz kleiner als das Produkt, so wird anschließend ein Zeitfenster aus der Summe des Werts im Eintrag Nr. 3 im Datenpostfach und den unteren vier Bits des Eintrags Nr. 10 im Informationspostfach berechnet. Dieses Zeitfenster gibt somit an, ob seit der letzten Service-Ladung ein festgelegter Zeitabschnitt verstrichen ist. Es wird nun dieser berechnete Wert des Zeitfensters verglichen mit dem aktuellen Stand einer Echtzeituhr RTC und im Fall, dass der aktuelle Wert der Echtzeituhr kleiner oder gleich dem Wert des Zeitfensters ist, dass die vorgegebene Zeitspanne also noch nicht überschritten ist, wird eine Energie-Sparladung initiiert, in dem als Ladefaktor der Zahlenwert aus dem Eintrag Nr. 4 des Informationspostfachs übernommen wird und der Betriebsmodus "Energiesparen" festgelegt wird, wonach die Batterie-Ladung gestartet wird. Ist in der Abfrage 23 oder in der Abfrage 24 das Ergebnis negativ, so wird zunächst der im Eintrag Nr. 5 des Datenpostfachs vorgesehene Zähler für Service-Ladung, also die unteren vier Bit, inkrementiert, und es wird in einer Abfrage 25 anschließend geprüft, ob die im Eintrag Nr. 9, insbesondere den oberen vier Bit, festgelegte maximale Anzahl von Service-Ladungen überschritten ist.

Ist dies nicht der Fall, so wird eine Service-Ladung initiiert, wobei als Ladefaktor der Wert im Eintrag Nr. 5 des Infopostfachs übernommen und als Betriebsmodus "Service" festgelegt werden. Anschließend wird mit diesen übernommenen Parametern die Batterie-Ladung im Startpunkt 27 gestartet.

Ist die Abfrage 25 positiv beantwortet, so wird der Zählerstand in den oberen vier Bit des Eintrags Nr. 5 im Datenpostfach inkrementiert, und es wird geprüft, ob der so ermittelte Zählerstand den maximalen Zählerstand in den oberen vier Bit des Eintrag Nr. 9 im Informationspostfach erreicht oder überschreitet.

Ist dies der Fall, so wird eine Mitteilung über eine Störung gespeichert und angezeigt, und es wird eine Korrektur-Ladung initiiert, indem als Ladefaktor der Wert im Eintrag Nr. 6 und als Modus "Korrektur" übernommen wird.

Ist die Abfrage 26 negativ, so wird direkt eine Korrektur-Ladung, wie beschrieben, initiiert. Anschließend wird auch hier die Batterie-Ladung am Startpunkt 27 gestartet.

An dem Startpunkt 27 schließt sich nun das in Fig. 5 näher beschriebene Schema an, wobei die zuvor festgelegten Parameter, insbesondere den Ladefaktor und den Modus betreffend, übernommen werden.

Nach dem Starten der Batterie-Ladung am Startpunkt 27 werden in einem nächsten Schritt 28 zunächst die für die Steuerung des Ladevorgangs am Laderegler benötigten physikalischen Daten wie Stromspannung, Temperaturzeit und dergleichen aufbereitet beziehungsweise bereit- und eingestellt.

Nun wird in einer Schleife 29 die Batterie aufgeladen. Hierbei wird insbesondere der Zahlenwert im Eintrag Nr. 2 des Datenpostfachs um die durch den in einem Zeitintervall dt geflossenen Ladestrom I bestimmte Ladungsmenge vermehrt, wodurch sich die akkumulierte Ladungsmenge ergibt, und es wird der so aktualisierte Wert im Datenpostfach 12, 18, 20 gespeichert. Anschließend wird in einer Abfrage 30 geprüft, ob die im aktuellen Ladevorgang verstrichene Zeit unterhalt der Sulfatationssperre liegt. Ist dies nicht der Fall, so wird die Schleife 29 mit allgemeinen Ladefunktionen 31 wie insbesondere der Generierung und Speicherung von Daten und der Bedienung einer Anzeige über den Fortschritt des Ladevorgangs fortgesetzt und es wird anschließend in einer Abfrage 36 geprüft, ob die Ladung beendet ist, ob also die der Batterie entnommene Ladung dieser wieder zugeführt wurde. Ist die Abfrage 36 mit Nein zu beantworten, so wird die Schleife 29 weiter fortgeführt, bis das Ladeende erkannt ist.

Ist das Ladeende erkannt und damit die Abfrage 36 positiv beantwortet, so wird, falls der durchgeführte Modus nicht mit "Energiesparen" festgelegt war, also falls der Modus mit "Service" oder mit "Korrektur" festgelegt war, der Zähler im Eintrag Nr. 4 des Datenpostfachs auf Null zurückgesetzt, da eine Service-Ladung beziehungsweise eine Korrektur-Ladung durchgeführt wurde. Anschließend werden die Zählerstände für die normierte akkumulierte Ladebilanz für N & 1 aus Eintrag Nr. 2 im Datenpostfach und der Zählerstand der unteren vier Bit des Eintrags Nr. 5 im Datenpostfach auf Null zurückgesetzt und der Eintrag Nr. 3 der letzten Service-Ladung auf den aktuellen Stand der Echtzeituhr RTC gesetzt. Nun wird abgefragt, ob als Modus "Service" oder "Korrektur" festgelegt war. War als Modus "Korrektur" festgelegt, so werden die oberen vier Bit im Eintrag Nr. 5 im Datenpostfach, also der Zähler für Korrektur-Ladung, auf Null zurückgesetzt.

Schließlich wird das Ladungsende 33 signalisiert und es werden die Daten im Datenpostfach 12, 18, 20 gespeichert und eine Anzeige mit der Signalisierung des Ladeendes und mit Angaben über den Ladevorgang bedient.

Ergab die Abfrage 32, dass ein Energiespar-Ladevorgang ausgeführt wurde, weil der Modus auf "Energiesparen" gesetzt war, so wird der Zähler im Eintrag Nr. 4 des Datenpostfachs, also der Zähler für N & 1 in den unteren vier Bits, inkrementiert, und es wird das Ladungsende 33 signalisiert.

Ergab die Abfrage 30, dass die verstrichene Zeit kleiner als ein als Sulfatationssperre vorbestimmter Wert ist, so wird in einer Abfrage 34 abgefragt, ob ein Energiespar-Ladevorgang ausgeführt wird. Ist dies nicht der Fall, so wird mit den allgemeinen Ladefunktionen 31 und der Schleife 29 fortgefahren. Ist dies der Fall, so wird der Zähler im Eintrag Nr. 6, untere vier Bit, also der Zähler für Schutz vor Überladung, inkrementiert und es wird in einer Abfrage 35 geprüft, ob dieser Zählerstand den in dem Eintrag Nr. 10, obere vier Bit, des Infopostfachs hinterlegten maximalen Zählerstand für Überladung erreicht oder übersteigt. Ist dies der Fall, so wird eine Ladung erzwungen, indem mit den allgemeinen Ladefunktionen 31 und mit der Schleife 29 fortgefahren wird. Ist dies nicht der Fall, so wird das Ladeende im Schritt 33 signalisiert. Somit wird bei einem Energiespar-Ladevorgang der Ladevorgang erzwungen, obwohl eine volle Batterie bei Ladebeginn erkannt wurde, wenn eine vorbestimmte Anzahl von Erkennungen stattgefunden hat.

Fig. 6 zeigt eine Weiterbildung des in Fig. 5 dargestellten und erläuterten Verfahrens, welches sich ebenfalls an den Startpunkt 27 aus Fig. 4 anschließen kann. Gleiche Bezugszeichen und gleiche Feldbezeichnungen kennzeichnen gleiche Verfahrensschritte.

Das Verfahren gemäß Fig. 6 unterscheidet sich von dem gemäß Fig. 5 dadurch, dass statt der Abfrage 36 eine zusätzliche Routine 37 zur Umsetzung einer Überladung der Batterie entsprechend dem festgelegten Ladefaktor vorgesehen ist, und dass eine weitere Routine 38 kurz vor Abschluss dieser Überladung vorgesehen ist.

Im Anschluss an die Ausführung der allgemeinen Ladefunktionen 31 ist gemäß Fig. 6 daher vorgesehen, dass zunächst in einer Abfrage 39 geprüft wird, ob ein Kalibrierpunkt erreicht ist. Dieser Kalibrierpunkt kann durch entsprechende Einträge im Infopostfach, beispielsweise dem Eintrag Nr. 8, vorgegeben sein. Ist der Kalibrierpunkt nicht erreicht, so wird in einem Schritt 40 die normierte akkumulierte Zwischenladebilanz gemäß Eintrag 1 im Datenpostfach um die durch den Ladestrom I in einem Zeitintervall dt eingespeiste Ladungsmenge, multipliziert mit dem festgelegten Ladefaktor LF, erhöht und im Datenpostfach gespeichert, wonach sich die Schleife 29 fortsetzt.

Ist der Kalibrierpunkt in Abfrage 39 erreicht, so wird von dem Eintrag Nr. 1 im Datenpostfach die durch den Strom I im Zeitintervall dt der Batterie zugeführten Ladung abgezogen, und es wird der Zähler für Schutz vor Überladung aus Eintrag Nr. 6 im Datenpostfach zurückgesetzt. Durch die Subtraktion wird erreicht, dass die nach dem aktuellen Ladefaktor angestrebte Überladung der Batterie auch über mehrere Ladevorgänge verteilt umgesetzt werden kann, bis die normierte akkumulierte Zwischenladebilanz gemäß Eintrag Nr. 1 des Datenpostfachs abgearbeitet ist. In einer Abfrage 41 wird nun geprüft, ob die reguläre Ladung beendet ist. Ist dies nicht der Fall, so wird die Schleife 29 fortgesetzt, ist dies der Fall, so wird in einer Abfrage 42 geprüft, ob der verbleibende Wert der normierten akkumulierten Zwischenladebilanz aus Eintrag Nr. 1 im Datenpostfach größer als 5 % der Nennkapazität ist.

Ist das Ergebnis der Abfrage 42 negativ, so setzt sich der bereits in Fig. 5 beschriebene Ablauf mit der Abfrage 32 fort, während im positiven Fall eine Intervall-Ladung 43 durchgeführt wird, die abwechselnd zeitliche Abschnitte mit Ladevorgang und zeitliche Abschnitte ohne Ladevorgang umfasst.

Bei dem Verfahren zum Laden einer Batterie 2 ist vorgesehen, dass in Abhängigkeit von den durchgeführten Ladevorgängen an einer Batterie 2 nach einer vorbestimmten Anzahl von Ladevorgängen und/oder einer vorbestimmten, der Batterie zugeführten Ladungsmenge ein Ladevorgang mit erhöhtem Ladefaktor, bei dem ein Gasen der Batterie auftritt, durchgeführt wird.

## Patentansprüche

1. Verfahren zum Laden einer Batterie, wobei die Batterie (2) für die Dauer jedes Ladevorgangs an ein Ladegerät (3) angeschlossen wird und wobei über mehrere aufeinander folgende Ladevorgänge der Batterie (2) wenigstens ein Zählerstand (Daten2, Daten4L) gebildet wird, welcher diese mehreren aufeinander folgenden Ladevorgänge charakterisiert, **dadurch gekennzeichnet, dass** nach Anschluss der Batterie (2) an das Ladegerät (3) der aktuelle Zählerstand (Daten2, Daten4L) ausgelesen wird und ein Ladevorgang in einem ersten Betriebsmodus (Energiesparen) mit einem ersten Ladefaktor (LF, Info4) gestartet wird, wenn der Zählerstand (Daten2, Daten4L) einen vorbestimmten Wert nicht überschreitet, und ein Ladevorgang in einem zweiten Betriebsmodus (Service) mit einem zweiten Ladefaktor (Info5) gestartet wird, wenn der Zählerstand (Daten2, Daten4L) den vorbestimmten Wert überschreitet, und dass der zweite Ladefaktor (Info5) größer als der erste Ladefaktor (Info4) ist.

2. Verfahren nach Anspruch 1, **dadurch gekennzeichnet, dass** der zweite Ladefaktor (Info5) ein Gasen der Batterie (2) während eines vollständig durchgeführten Ladevorgangs im zweiten Betriebsmodus (Service) erzwingt.

3. Verfahren nach einem der Ansprüche 1 oder 2, **dadurch gekennzeichnet, dass** der erste Ladefaktor (Info4) ein Gasen der Batterie (2) während eines vollständig durchgeführten Ladevorgangs im ersten Betriebsmodus (Energiesparen) im Wesentlichen vermeidet und/oder dass bei Überschreiten einer vorbestimmten Anzahl von Ladevorgängen im zweiten Betriebsmodus (Service) ein Ladevorgang in einem dritten Betriebsmodus (Korrektur) mit einem dritten Ladefaktor (Info6) erzwungen wird, wobei der dritte Ladefaktor (Info6) größer als der zweite Ladefaktor (Info5) ist.

4. Verfahren nach einem der Ansprüche 1 bis 3, **dadurch gekennzeichnet, dass** der Zählerstand (Daten2, Daten4L) wenigstens durch die Anzahl der aufeinander folgenden Ladevorgänge der Batterie (2) bestimmt ist und/oder dass die akkumulierte Lademenge (Daten2) für aufeinanderfolgende Ladevorgänge in einem ersten Zwischenspeicher abgelegt wird.

5. Verfahren nach einem der Ansprüche 1 bis 4, **dadurch gekennzeichnet, dass** der Zählerstand (Daten2, Daten4L) wenigstens durch den Wert der akkumulierten Lademenge (Daten2) im ersten Zwischenspeicher bestimmt ist und dass der vorbestimmte Wert für den Zählerstand der akkumulierten Lademenge (Daten2) einer vorbestimmten Anzahl von vollständig durchgeführten Ladevorgängen entspricht und/oder dass die zur Erreichung des Ladefaktors (Info4, Info5, Info6) eines Ladevorgangs erforderliche Überladung für aufeinanderfolgende Ladevorgänge in einem zweiten Zwischenspeicher (Daten1) akkumuliert wird.

6. Verfahren nach einem der Ansprüche 1 bis 5, **dadurch gekennzeichnet, dass** der erste und/oder zweite Zwischenspeicher (Daten1, Daten2) vor Beginn eines Ladevorgangs ausgelesen wird und die Werte des Zwischenspeichers (Daten1, Daten2) oder der Zwischenspeicher (Daten1, Daten2) während das Ladevorgangs weiterverarbeitet und im Zwischenspeicher (Daten1, Daten2) oder in den Zwischenspeichern regelmäßig abgelegt wird/werden.

7. verfahren nach einem der Ansprüche 1 bis 6, **dadurch gekennzeichnet, dass** nach Beenden der regulären Ladung oder nach Erreichen des Kalibrierpunkts entsprechend dem Wert im zweiten Zwischenspeicher (Daten1) eine Überladung in die Batterie (2) eingespeist wird, wobei der zweite Zwischenspeicher (Daten1) entsprechend der bereits eingespeisten Überladung in regelmäßigen Abständen aktualisiert wird.

8. Verfahren nach einem der Ansprüche 1 bis 7, **dadurch gekennzeichnet, dass** eine Intervallladung (43) ausgeführt wird, wenn der zweite Zwischenspeicher (Daten1) einen Wert für Überladung enthält, der 5% der Nennkapazität der angeschlossenen Batterie (2) nicht übersteigt und dass die Intervallladung (43) abwechselnde zeitliche Abschnitte mit Ladevorgang und zeitliche Abschnitte ohne Ladevorgang umfasst und/oder dass der Zählerstand (Daten2, Daten4L) wenigstens durch die verstrichene Zeitdauer seit dem letzten ausgeführten Ladevorgang bestimmt ist und/oder dass das Ausführen eines Ladevorgangs im dritten Betriebsmodus (Korrektur) angezeigt wird.

9. Verfahren nach einem der Ansprüche 1 bis 8, **dadurch gekennzeichnet, dass** bei Überschreiten einer vorbestimmten Anzahl von Ladevorgängen im dritten Betriebsmodus (Korrektur) eine Fehlermeldung ausgegeben und/oder dokumentiert wird.

10. Verfahren nach einem der Ansprüche 1 bis 9, **dadurch gekennzeichnet, dass** bei einem Ladevorgang im ersten Betriebsmodus (Energiesparen) zu Beginn geprüft wird, ob eine volle Batterie (2) angeschlossen ist, und dass in diesem Fall der Ladevorgang im ersten Betriebsmodus (Energiesparen) ausgeführt wird, wenn die Anzahl der Erkennungen (Daten4H) einer vollen angeschlossenen Batterie (2) einen vorbestimmten Wert (Info10H) überschreitet, und nicht ausgeführt wird, wenn diese Anzahl den vorbestimmten Wert (Info10H)nicht überschreitet.

11. Verfahren nach einem der Ansprüche 1 bis 10, **dadurch gekennzeichnet, dass** die Ladevorgänge im ersten, zweiten und gegebenenfalls dritten Betriebsmodus (Energiesparen, Service, Korrektur) durch jeweils einen oder mehrere Parameter (Info4, Info5, Info6, Modus) gekennzeichnet sind und dass die Ladevorgänge im ersten, zweiten und gegebenenfalls dritten Betriebsmodus (Energiesparen, Service, Korrektur) durch ein identisches, von diesen Parametern (Info4, Info5, Info6, Modus) abhängiges Steuerungsprogramm gesteuert und/oder geregelt werden.

12. Verfahren nach einem der Ansprüche 1 bis 11, **dadurch gekennzeichnet, dass** die Batterie (2) ein Bleiakkumulator ist.

13. Verfahren nach einem der Ansprüche 1 bis 12, **dadurch gekennzeichnet, dass** wenigstens ein Zählerstand (Daten2, Daten3, Daten4L) durch die Anzahl der durchgeführten aufeinander folgenden Ladevorgänge bestimmt ist und/oder wenigstens ein Zählerstand durch die über mehrere aufeinander folgende Ladevorgänge akkumulierte Lademenge bestimmt ist und/oder wenigstens ein Zählerstand durch die verstrichene Zeitdauer seit dem letzten Ladevorgang bestimmt ist und dass nach Anschluss der Batterie (2) an das Ladegerät (3) die aktuellen Zählerstände (Daten2, Daten3, Daten4L) ausgelesen werden und ein Ladevorgang im zweiten Betriebsmodus (Service) gestartet wird, wenn wenigstens einer der Zählerstände seinen vorbestimmten Wert (Info7L, Info10L) überschreitet, und andernfalls ein Ladevorgang im ersten Betriebsmodus (Energiesparen) gestartet wird.

14. Batterieladesystem mit wenigstens einem Ladegerät (3) und wenigstens einer an das wenigstens eine Ladegerät (3) anschließbaren Batterie (2), **dadurch gekennzeichnet, dass** Mittel zur Ausführung eines Verfahrens nach wenigstens einem der vorangegangenen Ansprüche ausgebildet sind.

15. Batterieladesystem nach Anspruch 14, **dadurch gekennzeichnet, dass** die Batterie (2) und/oder das Ladegerät (3) wenigstens ein Speichermedium (11, 12, 17, 18, 19, 20) zur Speicherung der Zählerstände (Daten1, Daten3, Daten4L) und/oder der Parameter (Info4, Info5, Info6, Info7, Info8, Info9, Info10) hat.

## Claims

1. Method for charging a battery, the battery (2) being connected to a charging unit (3) for the duration of each charging operation, and there being formed over a plurality of consecutive charging operations of the battery (2) at least one counter reading (Daten2, Daten4L) which characterizes said plurality of consecutive charging operations, **characterized in that**, after connection of the battery (2) to the charging unit (3), the current counter reading (Daten2, Daten4L) is read out and a charging operation is started in a first operating mode (energy saving) with a first charging factor (LF, Info4) when the counter reading (Daten2, Daten4L) does not exceed a predetermined value, and a charging operation is started in a second operating mode (service) with a second charging factor (Info5) when the counter reading (Daten2, Daten4L) exceeds the predetermined value, and **in that** the second charging factor (Info5) is greater than the first charging factor (Info4).

2. Method according to Claim 1, **characterized in that** the second charging factor (Info5) causes a gassing of the battery (2) during a fully accomplished charging operation in the second operating mode (service).

3. Method according to either of Claims 1 and 2, **characterized in that** the first charging factor (Info4) substantially avoids a gassing of the battery (2) during a fully accomplished charging operation in the first operating mode (energy saving), and/or **in that**, when a predetermined number of charging operations is exceeded in the second operating mode (service), a charging operation is caused in a third operating mode (correction) with a third charging factor (Info6), the third charging factor (Info6) being greater than the second charging factor (Info5).

4. Method according to one of Claims 1 to 3, **characterized in that** the counter reading (Daten2, Daten4L) is determined at least by the number of the consecutive charging operations of the battery (2), and/or **in that** the accumulated charge quantity (Daten2) for consecutive charging operations is stored in a first buffer memory.

5. Method according to one of Claims 1 to 4, **characterized in that** the counter reading (Daten2, Daten4L) is determined at least by the value of the accumulated charge quantity (Daten2) in the first buffer memory, and **in that** the predetermined value for the counter reading of the accumulated charge quantity (Daten2) corresponds to a predetermined number of fully accomplished charging operations, and/or **in that** the overcharging necessary to achieve the charging factor (Info4, Info5, Info6) of a charging operation is accumulated for consecutive charging operations in a second buffer memory (Daten1).

6. Method according to one of Claims 1 to 5, **characterized in that** the first and/or second buffer memory/memories (Daten1, Daten2) are/is read out before the start of a charging operation, and the values of the buffer memory (Daten1, Daten2) or the buffer memories (Daten1, Daten2) are/is further processed during the charging operation and are/is regularly stored in the buffer memory (Daten1, Daten2) or in the buffer memories.

7. Method according to one of Claims 1 to 6, **characterized in that** an overcharge is fed into the battery (2) after termination of the regular charging or once the calibration point corresponding to the value in the second buffer memory (Daten1) has been achieved, the second buffer memory (Daten1) being updated at regular intervals in accordance with the overcharge already fed in.

8. Method according to one of Claims 1 to 7, **characterized in that** interval charging (43) is executed when the second buffer memory (Daten1) contains a value for overcharging which does not exceed 5% of the rated capacity of the connected battery (2), and **in that** the interval charging (43) comprises alternating time spans with a charging operation and time spans without a charging operation, and/or **in that** the counter reading (Daten2, Daten4L) is determined at least by the elapsed period since the last executed charging operation, and/or **in that** the execution of a charging operation is displayed in the third operating mode (correction).

9. Method according to one of Claims 1 to 8, **characterized in that** a fault message is output and/or documented when a predetermined number of charging operations is exceeded in the third operating mode (correction).

10. Method according to one of Claims 1 to 9, **characterized in that** during a charging operation a check is made at the start in the first operating mode (energy saving) as to whether a full battery (2) is connected, and **in that** in this case the charging operation is executed in the first operating mode (energy saving) when the number of the detections (Daten4H) of a full connected battery (2) exceeds a predetermined value (Info10H), and is not executed when said number does not exceed the predetermined value (InfolOH).

11. Method according to one of Claims 1 to 10, **characterized in that** the charging operations in the first, second and, if appropriate, third operating mode (energy saving, service, correction) are characterized respectively by one or more parameters (Info4, Info5, Info6, Modus), and **in that** in the first, second and, if appropriate, third operating mode (energy saving, service, correction) the charging operations are controlled and/or regulated by an identical control programme dependent on said parameters (Info4, Info5, Info6, Modus).

12. Method according to one of Claims 1 to 11, **characterized in that** the battery (2) is a lead-acid battery.

13. Method according to one of Claims 1 to 12, **characterized in that** at least one counter reading (Daten2, Daten3, Daten4L) is determined by the number of the accomplished consecutive charging operations, and/or at least one counter reading is determined by the charge quantity accumulated over a plurality of consecutive charging operations, and/or at least one counter reading is determined by the elapsed period since the last charging operation, and **in that**, after the battery (2) has been connected to the charging unit (3), the current counter readings (Daten2, Daten3, Daten4L) are read out and a charging operation is started in the second operating mode (service) when at least one of the counter readings exceeds its predetermined value (Info7L, Info10L) and, otherwise, a charging operation is started in the first operating mode (energy saving).

14. Battery charging system with at least one charging unit (3) and at least one battery (2) which can be connected to the at least one charging unit (3), **characterized in that** means are designed for executing a method according to at least one of the preceding claims.

15. Battery charging system according to Claim 14, **characterized in that** the battery (2) and/or the charging unit (3) has at least one storage medium (11, 12, 17, 18, 19, 20) for storing the counter readings (Daten1, Daten3, Daten4L) and/or the parameters (Info4, Info5, Info6, Info7, Info8, Info9, Info10).

## Revendications

1. Procédé pour charger une batterie, la batterie (2) étant raccordée à un chargeur (3) pendant la durée de chaque opération de charge et au moins une position de compteur (Données2, Données4L) étant formée sur plusieurs opérations de charge successives de la batterie (2), laquelle caractérise ces plusieurs opérations de charge successives, **caractérisé en ce qu'**après le raccordement de la batterie (2) au chargeur (3), la position de compteur (Données2, Données4L) actuelle est lue et une opération de charge est démarrée dans un premier mode de fonctionnement (économie d'énergie) avec un premier facteur de charge (LF, Info4) lorsque la position de compteur (Données2, Données4L) ne dépasse pas une valeur prédéfinie et une opération de charge est démarrée dans un deuxième mode de fonctionnement (service) avec un deuxième facteur de charge (Info5) lorsque la position de compteur (Données2, Données4L) dépasse la valeur prédéfinie, et **en ce que** le deuxième facteur de charge (Info5) est supérieur au premier facteur de charge (Info4).

2. Procédé selon la revendication 1, **caractérisé en ce que** le deuxième facteur de charge (Info5) force un dégagement gazeux de la batterie (2) pendant une opération de charge entièrement réalisée dans le deuxième mode de fonctionnement (service).

3. Procédé selon l'une des revendications 1 ou 2, **caractérisé en ce que** le premier facteur de charge (Info4) prévient sensiblement un dégagement gazeux de la batterie (2) pendant une opération de charge entièrement réalisée dans le premier mode de fonctionnement (économie d'énergie) et/ou **en ce qu'**en cas de dépassement d'un nombre prédéfini d'opérations de charge dans le deuxième mode de fonctionnement (service), une opération de charge est forcée dans un troisième mode de fonctionnement (correction) avec un troisième facteur de charge (Info6), le troisième facteur de charge (Info6) étant supérieur au deuxième facteur de charge (Info5).

4. Procédé selon l'une des revendications 1 à 3, **caractérisé en ce que** la position de compteur (Données2, Données4L) est définie au moins par le nombre d'opérations de charge successives de la batterie (2) et/ou **en ce que** la quantité de charge cumulée (Données2) pour les opérations de charge successives est stockée dans une première mémoire temporaire.

5. Procédé selon l'une des revendications 1 à 4, **caractérisé en ce que** la position de compteur (Données2, Données4L) est au moins définie par la valeur de la quantité de charge cumulée (Données2) dans la première mémoire temporaire et **en ce que** la valeur prédéfinie pour la position de compteur de la quantité de charge cumulée (Données2) correspond à une nombre prédéfini d'opérations de charge entièrement réalisées et/ou **en ce que** la surcharge nécessaire pour atteindre le facteur de charge (Info4, Info5, Info6) d'une opération de charge pour les opérations de charge successives est totalisée dans une deuxième mémoire temporaire (Données1).

6. Procédé selon l'une des revendications 1 à 5, **caractérisé en ce que** la première et/ou la deuxième mémoire temporaire (Données1, Données2) est/sont lue(s) avant le début d'une opération de charge et les valeurs de la mémoire temporaire (Données1, Données2) ou des mémoires temporaires (Données1, Données2) sont soumises à un traitement supplémentaire pendant l'opération de charge et stockées régulièrement dans la mémoire temporaire (Données1, Données2) ou dans les mémoires temporaires.

7. Procédé selon l'une des revendications 1 à 6, **caractérisé en ce qu'**après que la charge normale est terminée ou après que le point de calibrage correspondant à la valeur dans la deuxième mémoire temporaire (Données1) a été atteint, une surcharge est injectée dans la batterie (2), la deuxième mémoire temporaire (Données1) étant actualisée à intervalles réguliers conformément à la surcharge déjà injectée.

8. Procédé selon l'une des revendications 1 à 7, **caractérisé en ce qu'**une charge périodique (43) est effectuée lorsque la deuxième mémoire temporaire (Données1) contient une valeur pour la surcharge qui ne dépasse pas 5 % de la capacité nominale de la batterie (2) raccordée et **en ce que** la charge périodique (43) comprend en alternance des intervalles de temps avec opération de charge et des intervalles de temps sans opération de charge et/ou **en ce que** la position de compteur (Données2, Données4L) est définie au moins par la durée écoulée depuis la dernière opération de charge réalisée et/ou **en ce que** l'exécution d'une opération de charge dans le troisième mode de fonctionnement (correction) est indiquée.

9. Procédé selon l'une des revendications 1 à 8, **caractérisé en ce qu'**un message d'erreur est délivré et/ou documenté en cas de dépassement d'un nombre prédéfini d'opérations de charge dans le troisième mode de fonctionnement (correction).

10. Procédé selon l'une des revendications 1 à 9, **caractérisé en ce que** lors d'une opération de charge dans le premier mode de fonctionnement (économie d'énergie), un contrôle est effectué au début pour vérifier si une batterie (2) pleine est raccordée et **en ce que**, dans ce cas, l'opération de charge est réalisée dans le premier mode de fonctionnement (économie d'énergie) lorsque le nombre de détections (Données4H) d'une batterie (2) pleine raccordée dépasse une valeur prédéfinie (Info10H) et n'est pas réalisée lorsque ce nombre ne dépasse pas la valeur prédéfinie (InfolOH).

11. Procédé selon l'une des revendications 1 à 10, **caractérisé en ce que** les opérations de charge dans les premier, deuxième et éventuellement troisième modes de fonctionnement (économie d'énergie, service, correction) sont caractérisées respectivement par un ou plusieurs paramètres (Info4, Info5, Info6, Mode) et **en ce que** les opérations de charge dans les premier, deuxième et éventuellement troisième modes de fonctionnement (économie d'énergie, service, correction) sont commandées et/ou régulées par un programme de commande identique, dépendant de ces paramètres (Info4, Info5, Info6, Mode).

12. Procédé selon l'une des revendications 1 à 11, **caractérisé en ce que** la batterie (2) est un accumulateur au plomb.

13. Procédé selon l'une des revendications 1 à 12, **caractérisé en ce qu'**au moins une position de compteur (Données2, Données3, Données4L) est définie par le nombre d'opérations de charge successives réalisées et/ou au moins une position de compteur est définie par la quantité de charge cumulée sur plusieurs opérations de charge successives et/ou au moins une position de compteur est définie par la durée écoulée depuis la dernière opération de charge et **en ce qu'**après le raccordement de la batterie (2) au chargeur (3), les positions de compteur (Données2, Données3, Données4L) actuelles sont lues et une opération de charge est démarrée dans le deuxième mode de fonctionnement (service) lorsqu'au moins l'une des positions de compteur dépasse sa valeur prédéfinie (Info7L, Info10L) et, le cas contraire, une opération de charge est démarrée dans le premier mode de fonctionnement (économie d'énergie).

14. Système de charge de batterie comprenant au moins un chargeur (3) et au moins une batterie (2) qui peut être raccordée à l'au moins un chargeur (3), **caractérisé en ce que** des moyens sont configurés pour mettre en oeuvre un procédé selon au moins l'une des revendications précédentes.

15. Système de charge de batterie selon la revendication 14, **caractérisé en ce que** la batterie (2) et/ou le chargeur (3) possède (nt) au moins un support d'enregistrement (11, 12, 17, 18, 19, 20) pour mettre en mémoire les positions de compteur (Données1, Données3, Données4L) et/ou les paramètres (Info4, Info5, Info6, Info7, Info8, Info9, Info10).
